# EUROPÄISCHE PATENTANMELDUNG

(11) **EP 2 911 260 A1**
(43) Veröffentlichungstag der Anmeldung: **26.08.2015**
(21) Anmeldenummer: 14155780.1
(22) Anmeldetag: 19.02.2014
(51) Int. Cl.: H02J 3/38

(54) **Einrichtung zur Einspeisung windkrafterzeugter elektrischer Energie in ein elektrisches Netz**

(71) Anmelder: Siemens Aktiengesellschaft, 80333 München (DE)
(72) Erfinder: Sahan, Benjamin, 90762 Fürth (DE); Hiller, Marc, 91207 Lauf an der Pegnitz (DE)

(57) **Zusammenfassung**

Es wird eine Einrichtung (1) zur Einspeisung windkrafterzeugter elektrischer Energie in ein elektrisches Netz (2,20) angegeben. Die Einrichtung (1) umfasst mehrere generatorseitige Gleichrichter (3), die ausgangsseitig in einem Gleichstromkreis (7) angeordnet sind. Jeder der generatorseitigen Gleichrichter (3) ist eingangsseitig jeweils über einen zwischengeschalteten generatorseitigen Transformator (6) mit einem Generator (5) einer Windenergieanlage verschaltet.

## Beschreibung

Die Erfindung bezieht sich auf eine Einrichtung zur Einspeisung windkrafterzeugter elektrischer Energie in ein elektrisches Netz.

Windenergieanlagen (WEA) tragen in stetig zunehmendem Maße zur öffentlichen Versorgung mit elektrischer Energie bei. In der üblichen Bauform umfasst eine Windenergieanlage einen Turm, an dessen Spitze eine Gondel - um eine vertikale Drehachse drehbar - gelagert ist. An der Gondel ist wiederum ein windbetriebener Rotor gelagert, der über eine Rotorwelle - unmittelbar oder mittelbar über ein Getriebe - einen Generator treibt.

Solche Windenergieanlagen können einzeln betrieben werden, so dass jede Windenergieanlage die von ihr erzeugte elektrische Energie separat in ein energieaufnehmendes elektrisches Netz einspeist. Zunehmend werden Windenergieanlagen allerdings in Gruppen zusammengefasst als Windpark betrieben. In diesem Fall wird die von den Windenergieanlagen des Windparks erzeugte Energie regelmäßig in einem gemeinsamen Einspeisepunkt in das Netz eingespeist. Windparks werden zunehmend in "Off-shore"-Lagen, also im ufernahen Meeresbereich, geplant.

Bei dem energieaufnehmenden Netz handelt es sich in der Regel um ein dreiphasiges Mittelspannungs-(Wechselstrom-)Netz, wie es üblicherweise zur regionalen Energieversorgung eingesetzt wird. Ein solches Mittelspannungsnetz führt typischerweise eine dreiphasige Wechselspannung mit einem Spannungsbetrag zwischen 10 und 30 kV und einer Frequenz von 50 oder 60 Hz. Insbesondere für die Anbindung von Offshore-Windparks an das Festland werden alternativ auch Hochspannungs-Gleichstrom-Netze eingesetzt, die typischerweise eine (Gleich-)Spannung größer 100 kV führen.

Zur Einspeisung in ein Mittelspannungsnetz wird der von dem Generator einer Windenergieanlage produzierte Drehstrom üblicherweise über einen generatorseitigen Stromrichter (Gleichrichter) gleichgerichtet und über einen Gleichspannungs-Zwischenkreis einem netzseitigen Stromrichter (Wechselrichter) zugeführt, der einen Wechselstrom mit der Frequenz des energieaufnehmenden Netzes erzeugt. Dieser Strom wird über einen - auf die Netzfrequenz ausgelegten - Netz-Transformator in das lokale Netz eingespeist. Den beiden Stromrichtern sind hierbei jeweils Filter vor- bzw. nachgeschaltet. Die Stromrichter sind in der Regel in Niederspannungs-Zweipunkttechnik ausgeführt.

Zur Anbindung eines Offshore-Windparks mittels Hochspannungs-Gleichstromübertragung werden üblicherweise mehrere Windenergieanlagen über ein Mittelspannungs-Wechselstromkabel parallelgeschaltet und zu einer seegestützten Transformatorstation geführt. Je nach Größe des Windparks können hierbei eine oder mehrere Transformatorstationen vorhanden sein. In der oder jeder Transformatorstation wird die zugelieferte Mittelspannung auf ein höheres Spannungsniveau von beispielsweise 150 kV hochtransformiert und einer ebenfalls seegestützten Konverterstation zugeführt. Durch die Konverterstation wird die gelieferte Wechselspannung dann gleichgerichtet und in das Hochspannungs-Gleichstrom-Netz eingespeist. An Land wird der Gleichstrom dann wiederum in Wechselspannung umgewandelt.

In EP 2 283 233 B1 wird eine Einrichtung zur Einspeisung windkrafterzeugter elektrischer Energie in ein elektrisches Netz vorgeschlagen, bei der zwei generatorseitige Gleichrichter ausgangsseitig in einer Reihenschaltung in einem Gleichstromkreis angeordnet sind, wobei jeder dieser beiden Gleichrichter ohne zwischengeschalteten Transformator mit einer Teilwicklung eines Generators einer Windenergieanlage verschaltet ist. Problematisch bei einem solchen System ist die Isolierung der Generatoren, insbesondere gegen die geerdete Gondel der Windenenergieanlage, wodurch wiederum die im Gleichstromkreis führbare Spannung begrenzt wird.

Der Erfindung liegt die Aufgabe zugrunde, eine Einrichtung zur Einspeisung windkrafterzeugter elektrischer Energie in ein elektrisches Netz anzugeben, die eine effektive Energieübertragung mit vergleichsweise geringem Aufwand, insbesondere vergleichsweise geringen Herstellungskosten und vergleichsweise geringem Platzbedarf für die Komponenten der Einrichtung, ermöglicht. Die Einrichtung soll dabei insbesondere vorteilhaft zur energietechnischen Anbindung von Offshore-Windparks an ein elektrisches Festlandnetz einsetzbar sein.

Diese Aufgabe wird erfindungsgemäß gelöst durch die Merkmale des Anspruchs 1. Vorteilhafte und teils für sich gesehen erfinderische Ausgestaltungsformen und Weiterentwicklungen der Erfindung sind in den Unteransprüchen und der nachfolgenden Beschreibung dargelegt.

Die erfindungsgemäße Einrichtung umfasst mehrere generatorseitige Gleichrichter, die ausgangsseitig in einem Gleichstromkreis angeordnet sind. Jeder der generatorseitigen Gleichrichter ist hierbei eingangsseitig mit einem Generator einer Windenergieanlage verschaltet. Erfindungsgemäß ist jeder der generatorseitigen Gleichrichter hierbei über einen zwischengeschalteten Transformator (nachfolgend als "generatorseitiger Transformator" bezeichnet) mit dem zugeordneten Generator verschaltet, der die von dem Generator erzeugte Wechselspannung hochtransformiert. Somit lässt sich in dem Gleichstromkreis eine besonders hohe Spannung erzielen, ohne die Isolierung der Generatoren zu gefährden.

Dies ermöglicht insbesondere die Realisierung einer besonders einfachen und effizienten Ausführungsform der Erfindung, in der der Gleichstromkreis unmittelbar, d.h. ohne zwischengeschalteten Stromrichter oder Transformator, an das - in diesem Fall als Hochspannungs-Gleichstromnetz ausgebildete - Netz angeschlossen ist.

In einer alternativen Ausführungsform der Erfindung umfasst die Einrichtung zusätzlich einen Wechselrichter, der eingangsseitig - und in Reihe zu den generatorseitigen Gleichrichtern - in den Gleichstromkreis geschaltet ist. In dieser Ausführungsform ist die Einrichtung entweder zur Energieeinspeisung in ein Wechselstrom-Netz, insbesondere ein Mittelspannungs-Wechselstromnetz, oder zur Energieeinspeisung in ein Hochspannungs-Gleichstrom-Netz mit einer - im Vergleich zu dem Gleichstromkreis - höheren Spannung vorgesehen.

Zur Einspeisung in ein Mittelspannungs-Wechselstrom-Netz ist der Wechselrichter vorzugsweise ausgangsseitig ohne zwischengeschalteten (Netz-)Transformator, sondern lediglich über eine Netzdrossel mit dem Netz verschaltet. Somit werden einerseits der für den Netztransformator üblicherweise erforderliche Material-und Herstellungsaufwand als auch der für den Netztransformator üblicherweise vorzusehende Bauraum eingespart. Insbesondere der letztgenannte Aspekt stellt unter widrigen Umgebungsbedingungen - insbesondere in Offshore-Lagen - einen erheblichen Vorteil dar. Zudem werden auch die mit einem Netztransformator üblicherweise verbundenen Leistungsverluste eingespart.

Zur Einspeisung in ein Hochspannungs-Gleichstrom-Netz umfasst die Einrichtung in bevorzugter Ausgestaltung zusätzlich eine Transformatoreinheit sowie einen nachgeschalteten netzseitigen Gleichrichter, über die der Wechselrichter mit dem Netz verbunden ist. Vorzugsweise ist die Transformatoreinheit hierbei auf eine Mittelfrequenz ausgelegt, wodurch die (Mittelfrequenz-)Transformatoreinheit wesentlich kompakter realisierbar ist als ein herkömmlicher - für die Netzfrequenz ausgelegter - Netztransformator. Als "Mittelfrequenz" wird hierbei eine Frequenz bezeichnet, die mindestens das Zweifache der üblichen Netzfrequenz beträgt. Bei einer üblichen Netzfrequenz von 50 Hz oder 60 Hz ist die Mittelfrequenz-Transformatoreinheit daher vorzugsweise auf mindestens 100 bzw. 120 Hz ausgelegt. Vorzugsweise ist die Mittelfrequenz-Transformatoreinheit auf eine Frequenz zwischen 150 Hz und 250 Hz ausgelegt.

Im Sinne einer effektiven Glättung der in das Netz eingespeisten Gleichspannung ist die Mittelfrequenz-Transformatoreinheit einer zweckmäßigen Ausgestaltung als Mehrwicklungstransformator ausgebildet, der seinerseits eine Anzahl von Primärwicklungen und eine demgegenüber größere (insbesondere mehrfache) Anzahl von Sekundärwicklungen zur Erzeugung phasenversetzter Sekundärströme umfasst. Der netzseitige Gleichrichter ist hierbei als - entsprechend der Anzahl der Sekundärströme - mehrpulsiger Gleichrichter ausgebildet. Beispielsweise umfasst die Mittelfrequenz-Transformatoreinheit ein dreiphasiges Primärwicklungssystem und ein sechsphasiges Sekundärwicklungssystem. Der netzseitige Gleichrichter ist in diesem Fall entsprechend als sechspulsiger Gleichrichter ausgebildet.

Alternativ oder zusätzlich kann die Mittelfrequenz-Transformatoreinheit im Rahmen der Erfindung in zwei in Reihe geschaltete Transformatorstufen, nämlich eine generatorseitige Transformatorstufe und eine netzseitige Transformatorstufe gegliedert sein. Durch die beiden in Reihe geschalteten Transformatorstufen wird die in dem Gleichspannungskreis geführte Spannung stufenweise auf den Spannungswert des Hochspannungs-Gleichstrom-Netzes hochtransformiert, wobei zwischen den beiden Transformatorstufen ein mittleres Spannungsniveau realisiert wird. Dieses mittlere Spannungsniveau dient hierbei insbesondere zur Sammlung der von mehreren Gleichspannungskreisen abgegebenen Energie. Diese mehreren Gleichspannungskreise sind hierbei - über einen jeweils zugeordneten Wechselrichter - mit einer gemeinsamen netzseitigen Transformatorstufe verschaltet.

Vorzugsweise ist der Wechselrichter als Modularer Mehrpunkt-Stromrichter (auch als Modularer Multilevel-Stromrichter, kurz M2C-Stromrichter, bezeichnet) ausgebildet, wie er beispielsweise aus A. Lesnicar und R. Marquardt, "An innovative modular multilevel converter topology suitable for a wide power range", In Power Tech Conference Proceedings, 2003 IEEE Bologna, vol.3, S.6ff., 2003 bekannt ist Die Verwendung des M2C-Stromrichters als Wechselrichter im Gleichstromkreis der erfindungsgemäßen Einrichtung hat insbesondere den Vorteil, dass ein Netzfilter zwischen dem Wechselrichter und dem Netz sowie generatorseitige Tiefpass-Filter (du/dt-Filter) nicht erforderlich sind. Diese Filter sind daher in bevorzugter Ausführung der Einrichtung auch nicht vorgesehen sind. Durch den Einsatz des M2C-Stromrichters als Wechselrichter wird zudem auch eine hohe Verfügbarkeit (Ausfallsicherheit) und eine sichere Beherrschung besonders hoher Spannungen im Gleichstromkreis ermöglicht. Insbesondere ist durch den modularen Aufbau des M2C-Stromrichters baubedingt nahezu ausgeschlossen, dass es bei einem Ausfall einer elektronischen Komponente des Wechselrichters zu einem Kurzschluss innerhalb des Gleichstromkreises oder zu einem Spannungsüberschlag zwischen dem Gleichstromkreis und dem Ausgang des Wechselrichters kommt.

Zur Vermeidung von Isolationsproblemen in den Generatoren, und somit zur Realisierung einer besonders hohen Spannung im Gleichstromkreis ist vorzugsweise jeder der generatorseitigen Gleichrichter mit einem eigenen, separaten Generator verschaltet. Somit sind insbesondere nicht mehrere Gleichrichter mit mehreren Teilwicklungen desselben Generators verschaltet. Gleichwohl können im Rahmen der Erfindung allerdings mindestens zwei der Generatoren durch einen gemeinsamen Rotor ein und derselben Windenergieanlage angetrieben werden. Diese Generatoren können dabei im Rahmen der Erfindung wahlweise durch eine starre Welle unmittelbar oder durch ein Getriebe mittelbar gekoppelt sein.

Mindestens einem der generatorseitigen Transformatoren ist vorzugsweise ein Umrichter vorgeschaltet. Als Umrichter ist hierbei allgemein ein Stromrichter bezeichnet, der eine Wechselspannung in eine andere Wechselspannung umwandelt. Der dem generatorseitigen Transformator vorgeschaltete Umrichter ist hierbei konkret dazu eingerichtet, die von dem Generator erzeugte Wechselspannung in eine Wechselspannung höherer Frequenz umzuwandeln. Dies ermöglicht es, den nachgeschalteten Transformator (im Vergleich zu einem auf die Generatorfrequenz ausgelegten Transformator) kompakter und leichter zu realisieren. Insbesondere kann somit die für den Transformator benötigte Menge an Kupfer und Eisen wesentlich reduziert werden. In einer besonders zweckmäßigen Ausführungsform der Erfindung ist auch der vorstehend beschriebene Umrichter als M2C-Stromrichter, hier in der speziellen Bauform eines Modularen Mehrpunkt-Direktumrichters (M2C-Direktumrichters) ausgebildet. Die Topologie und Funktionsweise des M2C-Direktumrichters ist an sich aus M. Glinka, R. Marquardt: "A new AC/AC-Multilevel Converter Family Applied to a Single Phase Converter", IEEE-PEDS 2003, Singapur bekannt.

Grundsätzlich können die generatorseitigen Gleichrichter im Rahmen der Erfindung parallel zueinander in den Gleichstromkreis geschaltet sein. Vorzugsweise sind aber alle generatorseitigen Gleichrichter oder jeweils mehrere der generatorseitigen Gleichrichter innerhalb des Gleichstromkreises in einer Reihenschaltung verschaltet sind. Eine solche Reihenschaltung von generatorseitigen Gleichrichtern ist nachfolgend auch als "Strang" bezeichnet. Ein und derselbe Gleichstromkreis kann im Rahmen der Erfindung einen oder auch mehrere solcher Stränge umfassen, wobei in letzterem Fall die mehreren Stränge jeweils parallel geschaltet sind. Ein mehrere Stränge umfassender Gleichstromkreis wird nachfolgend auch als "Cluster" bezeichnet.

Verkörperungen der Erfindung sind ferner eine Windenergieanlage sowie ein Windpark mit mehreren Windenergieanlagen.

Die erfindungsgemäße Windenergieanlage umfasst einen windgetriebenen Rotor, mehrere (direkt oder indirekt über ein Getriebe) damit gekoppelte Generatoren sowie die erfindungsgemäße Einrichtung in einer der vorstehend beschriebenen Ausführungsformen.

Der erfindungsgemäße Windpark umfasst mehrere Windenergieanlagen. Jede dieser Windenergieanlagen umfasst hierbei jeweils einen windgetriebenen Rotor sowie mindestens einen damit gekoppelten Generator. Der Windpark umfasst weiterhin wiederum die erfindungsgemäße Einrichtung in einer der vorstehend beschriebenen Ausgestaltungsvarianten.

Nachfolgend werden Ausführungsbeispiele der Erfindung anhand einer Zeichnung näher erläutert. Darin zeigen:
- FIG 1: in einem schematischen Blockschaltbild eine Einrichtung zur Einspeisung windkrafterzeugter Energie in ein elektrisches Netz, das hier durch ein (Hochspannungs-Gleichstrom-)Netz gebildet ist, mit mehreren ausgangsseitig in Reihe in einen Gleichstromkreis geschalteten generatorseitigen Gleichrichtern, von denen jeder jeweils über einen generatorseitigen Transformator mit einem Generator einer Windenergieanlage verschaltet ist, wobei der Gleichstromkreis unmittelbar mit dem Netz verbunden ist,
- FIG 2: in Darstellung gemäß FIG 1 eine alternative Ausführungsform der Einrichtung, mit einem eingangsseitig in den Gleichstromkreis geschalteten Wechselrichter, der ausgangsseitig über eine Netzdrossel mit dem hier als Mittelspannungs-Wechselstrom-Netz ausgebildeten Netz verbunden ist,
- FIG 3: in Darstellung gemäß FIG 1 eine weitere alternative Ausführungsform der Einrichtung, mit einem eingangsseitig in den Gleichstromkreis geschalteten Wechselrichter, der ausgangsseitig über eine Mittelfrequenz-Transformatoreinheit und einen netzseitigen Gleichrichter mit dem hier wiederum als Hochspannungs-Gleichstrom-Netz ausgebildeten Netz verbunden ist,
- FIG 4: in einem schematischen Blockschaltbild den als Modularer Mehrpunkt-Stromrichter (M2C-Stromrichter) ausgebildeten Wechselrichter gemäß FIG 2 und 3,
- FIG 5: in einem elektrischen Schaltbild ein Submodul des Wechselrichters gemäß FIG 4,
- FIG 6: in Darstellung gemäß FIG 1 eine Variante der Einrichtung gemäß FIG 3, bei der die generatorseitigen Gleichrichter in Parallelschaltung zueinander in den Gleichstromkreis eingebunden sind,
- FIG 7: in Darstellung gemäß FIG 1 ausschnitthaft eine Ausgestaltungsform der Einrichtung, bei der jedem generatorseitigen Transformator ein Umrichter vorgeschaltet ist,
- FIG 8: in einem schematischen Blockschaltbild den Aufbau des als M2C-Direktumrichter ausgebildeten Umrichters gemäß FIG 7, und
- FIG 9: in einem elektrischen Schaltbild ein Submodul des M2C-Direktumrichters gemäß FIG 8.

Einander entsprechende Teile und Größen sind in allen Figuren stets mit gleichen Bezugszeichen versehen.

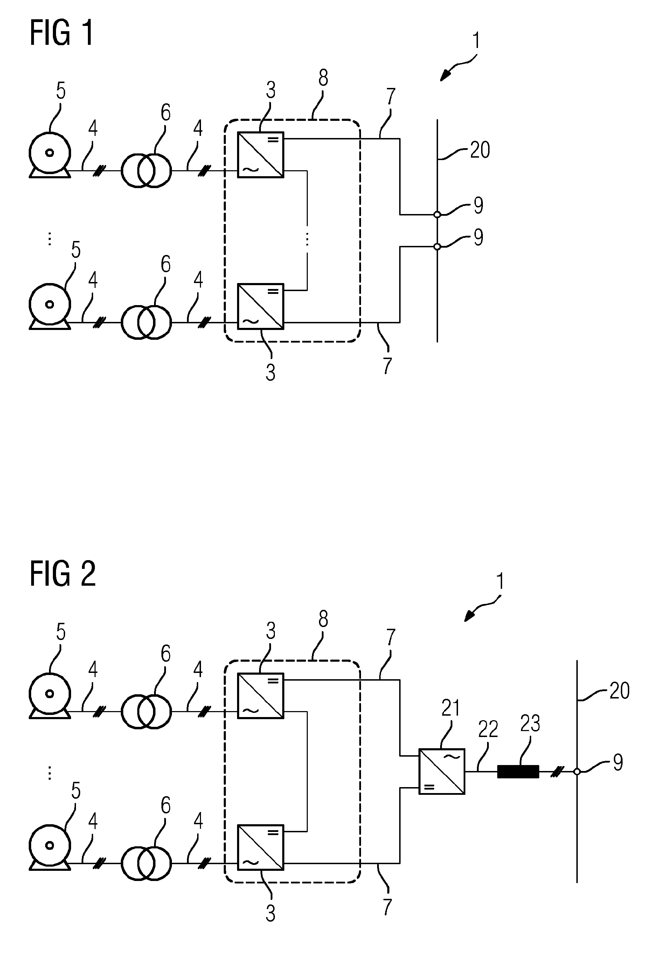

FIG 1 zeigt eine Einrichtung 1 zur Einspeisung von windkrafterzeugter elektrischer Energie in ein energieaufnehmendes elektrisches Netz, bei dem es sich in der Ausführung gemäß FIG 1 um ein (Hochspannungs-Gleichstrom-)Netz 2 handelt.

Die Einrichtung 1 umfasst mehrere (beispielsweise sechs) Gleichrichter 3, von denen in FIG 1 der besseren Übersichtlichkeit halber lediglich zwei dargestellt sind. Jeder der Gleichrichter 3 ist eingangsseitig über eine dreiphasige Generatorzuleitung 4 mit einem vorgeschalteten Generator 5 einer (hier nicht näher dargestellten) Windenergieanlage verschaltet. Die Gleichrichter 3 sind daher nachfolgend auch als generatorseitige Gleichrichter 3 bezeichnet. Die generatorseitigen Gleichrichter 3 und die Generatoren 5 sind einander paarweise zugeordnet. Alle Gleichrichter 3 ist somit jeweils verschiedenen Generatoren 5 zugeordnet, und ebenso ist jedem Generator 5 ein eigener, separater Gleichrichter 3 zugeordnet. Innerhalb der Generatorzuleitung 4 ist jedem Gleichrichter 3 und dem jeweils zugeordneten Generator 5 ein Transformator 6 (nachfolgend auch als generatorseitiger Transformator 6 bezeichnet) zwischengeschaltet.

Ausgangsseitig sind die Gleichrichter 3 in Reihe in einen Gleichstromkreis 7 geschaltet. Die Reihenschaltung der Gleichrichter 3 ist hierbei nachfolgend auch als Strang 8 bezeichnet. Der Gleichstromkreis 7 kann auch mehrere Stränge 8 umfassen, die zueinander parallelgeschaltet sind.

Über den Gleichstromkreis 7 ist der oder jeder Strang 8 unmittelbar, d.h. ohne zwischengeschalteten Stromrichter oder Transformator, in einem Einspeisepunkt 9 mit dem Netz 2 verbunden.

Im Betrieb der Einrichtung 1 speist jeder der Generatoren 5 eine frequenzveränderliche Wechselspannung mit einem variierenden Spannungsbetrag von bis zu ca. 10 kV in die Generatorzuleitung 4 ein. Durch den nachgeschalteten Transformator 5 wird diese Wechselspannung, beispielsweise auf einen Spannungswert von ca. 30 bis 50 kV, hochtransformiert. Die hochtransformierte Generatorspannung wird durch den wiederum nachgeschalteten Gleichrichter 3 gleichgerichtet. Durch die Reihenschaltung der Gleichrichter 3 wird hierdurch im Gleichstromkreis 7 eine Gleichspannung mit einem netzkompatiblen Spannungsbetrag von z.B. 300 bis 650 kV erzeugt.

In der alternativen Ausführungsform gemäß FIG 2 dient die Einrichtung 1 zur Energieeinspeisung in ein als Mittelspannungs-Wechselstrom-Netz 20 ausgebildetes Netz.

Die Einrichtung 1 umfasst hierzu zusätzlich einen Wechselrichter 21, der eingangsseitig in den Gleichstromkreis 7 geschaltet ist. Ausgangsseitig ist dieser Wechselrichter 21 über eine dreiphasige (Wechselstrom-)Einspeiseleitung 22 mit dem Netz 20 verbunden.

Über den Wechselrichter 21 wird die im Gleichstromkreis 7 gesammelte elektrische Leistung unmittelbar, also ohne zwischengeschalteten Netztransformator, in das Netz 20 eingespeist. Der Wechselrichter 21 gibt somit ausgangsseitig eine Wechselspannung aus, die hinsichtlich Frequenz und Spannungsbetrag der in dem Netz 20 geführten Netzspannung entspricht. In der Einspeiseleitung 22 ist lediglich eine Netzdrossel 23 zur Stabilisierung der von dem Wechselrichter 21 ausgegebenen Wechselspannung angeordnet.

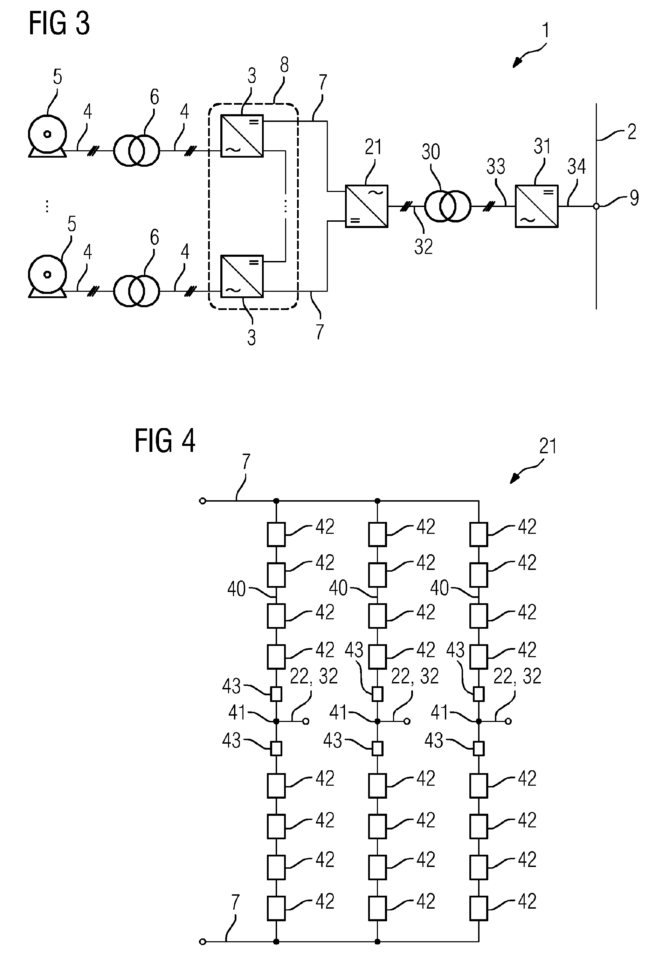

FIG 3 zeigt eine Abwandlung der Einrichtung 1 gemäß FIG 2, in der die Einrichtung 1 wiederum zur Energieeinspeisung in das Hochspannungs-Gleichstrom-Netz 2 dient. Anstelle der Einspeiseleitung 22 aus FIG 2 sind dem Wechselrichter 21 und dem Einspeisepunkt 9 gemäß FIG 3 eine (Mittelfrequenz-)Transformatoreinheit 30 und ein Gleichrichter 31 zwischengeschaltet. Die Transformatoreinheit 30 ist für eine Mittelfrequenz von beispielsweise 150 Hz ausgelegt. Der Gleichrichter 31 ist zur besseren Unterscheidung von den generatorseitigen Gleichrichtern 3 auch als netzseitiger Gleichrichter 31 bezeichnet. Der Gleichrichter 31 ist vorzugsweise als Diodengleichrichter ausgebildet.

Ein Primärwicklungssystem der Transformatoreinheit 30 ist über einen dreiphasigen Primärkreis 32 mit den Ausgängen des Wechselrichters 21, und über einen dreiphasigen Sekundärkreis 33 mit den Eingängen des Gleichrichters 31 verbunden. Der Gleichrichter 31 ist wiederum über eine (Gleichstrom-)Einspeiseleitung 34 mit dem Netz 2 verbunden.

In dem Primärkreis 32 wird von dem Wechselrichter 21 eine dreiphasige Wechselspannung mit der der Auslegung der Transformatoreinheit 30 zugrundegelegten Mittelfrequenz (z.B. 150 Hz) und einem Spannungsbetrag von z.B. 50 kV erzeugt. Durch die Transformatoreinheit 30 wird diese Wechselspannung auf einen Spannungsbetrag von 300 bis 650 kV hochtransformiert und in den Sekundärkreis 33 eingespeist. Der Gleichrichter 31 erzeugt in der Einspeiseleitung 34 eine Gleichspannung, die dem Betrag nach der im Netz 2 geführten Gleichspannung entspricht.

Zur Energieeinspeisung in das Hochspannungs-Gleichstrom-Netz 2 wird die Ausführungsform der Einrichtung gemäß FIG 3 vorzugsweise insbesondere dann anstelle der Ausführungsform gemäß FIG 1 eingesetzt, wenn aufgrund einer zu geringen Anzahl von Generatoren 5 und in Serie geschalteten Gleichrichtern 3 eine für die Direkteinspeisung ausreichende Spannung im Gleichstromkreis 7 nur mit unverhältnismäßig hohem Aufwand erreichbar ist.

Bei der Transformatoreinheit 30 handelt es sich im Ausführungsbeispiel gemäß FIG 3 um einen einzelnen, dreiphasigen Transformator. Alternativ hierzu kann die Transformatoreinheit 30 auch als Mehrwicklungstransformator ausgeführt sein, der ein dreiphasiges Primärwicklungssystem und ein mehrphasiges (insbesondere sechsphasiges) Sekundärwicklungssystem zur Erzeugung phasenversetzter Sekundärströme umfasst. Entsprechend ist in diesem Fall auch der nachgeschaltete Gleichrichter 31 mehrpulsig (insbesondere sechspulsig) ausgebildet.

Zusätzlich oder alternativ hierzu kann die Transformatoreinheit 30 auch zwei in Serie geschaltete Transformatorstufen umfassen, in denen die vom Wechselrichter 21 erzeugte Wechselspannung stufenweise hochtransformiert wird. Die beiden Transformatorstufen sind hierbei insbesondere räumlich getrennt angeordnet und durch einen Zwischenkreis verbunden, in dem eine Wechselspannung mit einem mittleren Spannungsniveau geführt ist.

Der bei beiden Ausführungsvarianten der Einrichtung 1 gemäß FIG 2 und 3 vorgesehene Wechselrichter 21 ist als modularer Mehrpunkt-Stromrichter (nachfolgend kurz: M2C-Stromrichter) ausgebildet, wie er schematisch in FIG 4 abgebildet ist.

In dieser Ausführungsform umfasst der Wechselrichter 21 drei Phasenstränge 40, die parallel zueinander in den Gleichstromkreis 7 geschaltet sind. Innerhalb eines jeden der Phasenstränge 40 umfasst der Wechselrichter 21 beidseitig (also sowohl hochpotentialseitig als auch niederpotentialseitig) eines jeweiligen Mittelabgriffs 41 jeweils eine Reihenschaltung von Submodulen 42. In der beispielhaften Ausführung gemäß FIG 4 sind hierbei in jedem Phasenstrang 40 sowohl hochpotentialseitig als auch niederpotentialseitig des jeweiligen Mittelabgriffs 41 jeweils vier Submodule 42 in Reihe geschaltet. Dem jeweiligen Mittelabgriff 41 und den Submodulen 42 des jeweiligen Phasenstrangs 40 ist hierbei - wiederum sowohl hochpotentialseitig als auch niederpotentialseitig - jeweils eine Drossel 43 zwischengeschaltet. Die Mittelabgriffe 41 sind im Ausführungsbeispiel der Einrichtung 1 gemäß FIG 2 mit der Einspeiseleitung 22 und im Ausführungsbeispiel der Einrichtung 1 gemäß FIG 3 mit dem Primärkreis 32 verschaltet.

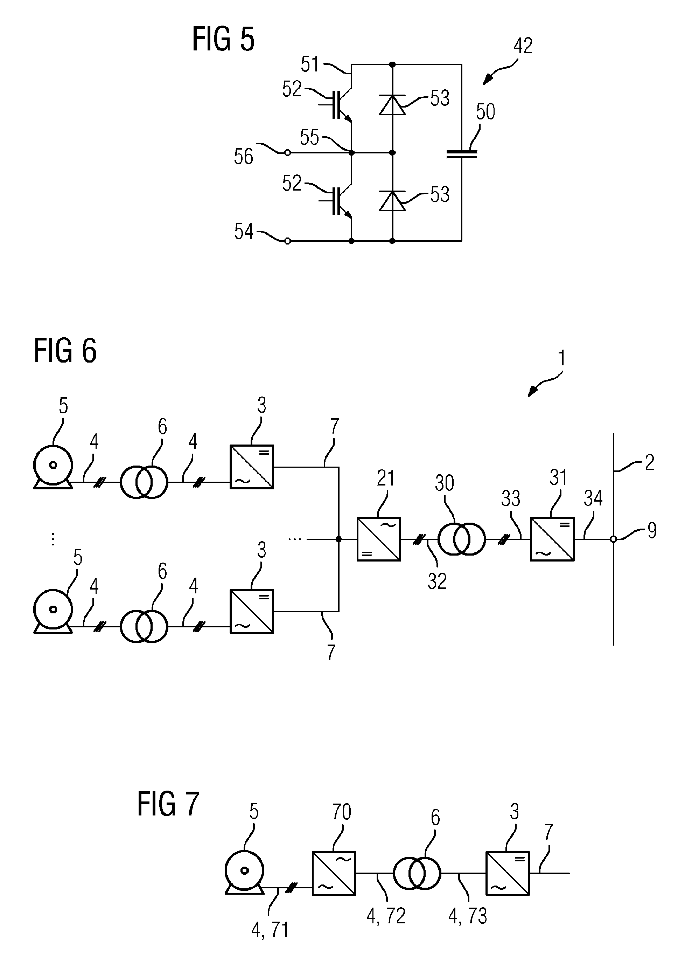

Eines der identischen Submodule 42 ist in FIG 5 näher dargestellt. Wie dieser Darstellung zu entnehmen ist, umfasst jedes der Submodule 42 eine - durch einen oder mehrere Kondensatoren gebildete - Kapazität 50 sowie eine Halbbrücke 51 mit zwei in Reihe geschalteten Halbleiterschaltern 52 (beispielsweise in Form von IGBT), wobei jedem Halbleiterschalter 51 eine Freilaufdiode 53 parallelgeschaltet ist. Die Halbbrücke 51 ist hierbei parallel zu der Kapazität 50 geschaltet. Jedes Submodul 42 ist über einen, mit dem Minuspol der Kapazität 50 verschalteten Minus-Port 54 sowie über einen mit einem Mittelabgriff 55 der Halbbrücke 51 verbundenen Plus-Port 56 in den jeweils zugehörigen Phasenstrang 40 geschaltet. In Hinblick auf die an sich bekannte Funktionsweise des M2C-Stromrichters wird auf A. Lesnicar und R. Marquardt, "An innovative modular multilevel converter topology suitable for a wide power range", In Power Tech Conference Proceedings, 2003 IEEE Bologna, vol.3, S.6ff., 2003 Bezug genommen.

Auch die generatorseitigen Gleichrichter 3 sind vorzugsweise als M2C-Stromrichter ausgebildet. Jeder der Gleichrichter 3 hat in dieser Ausführungsform einen Aufbau analog zu FIG 4, wobei an die Mittelabgriffe 41 abweichend von FIG 4 anstelle der Einspeiseleitung 22 bzw. anstelle des Primärkreises 32 die jeweilige Generatorzuleitung 4 angeschlossen ist. Desweiteren kann die Anzahl der in den Phasensträngen 40 in Reihe geschalteten Submodule 42 von der Darstellung gemäß FIG 4 abweichen. Insbesondere können die Gleichrichter 3 in ihren Phasensträngen 40 jeweils eine geringere Anzahl von in Reihe geschalteten Submodulen 42 aufweisen als der Wechselrichter 21.

Ebenso kann auch der netzseitige Gleichrichter 31 als M2C-Stromrichter ausgebildet sein. An die Mittelabgriffe 41 der Phasenstränge 40 ist in diesem Fall der Sekundärkreis 33 angeschlossen. Die parallelgeschalteten Phasenstränge 40 sind hierbei abweichend von FIG 4 an die Einspeiseleitung 34 angeschlossen.

Eine weitere Ausführungsform der Einrichtung 1, die wiederum zur Energieeinspeisung in das Hochspannungs-Gleichstrom-Netz 2 dient, ist in FIG 6 dargestellt. Diese unterscheidet sich von der Einrichtung 1 gemäß FIG 3 dadurch, dass die generatorseitigen Gleichrichter 3 nicht in Reihenschaltung, sondern in Parallelschaltung in den Gleichstromkreis 7 geschaltet sind.

Bei einer (nicht explizit dargestellten) Abwandlung der Einrichtung 1 gemäß FIG 6 ist zur Energieeinspeisung in das Mittelspannungs-Wechselstromnetz 20 - analog zu FIG 2 - anstelle der Mittelfrequenz-Transformatoreinheit 30, des Gleichrichters 31, des Primärkreises 32, des Sekundärkreises 33 und der Gleichstrom-Einspeiseleitung 34 die Wechselstrom-Einspeiseleitung 22 mit der darin angeordneten Netzdrossel 23 vorgesehen.

In einer in FIG 7 dargestellten Ausgestaltungsvariante der Einrichtung 1 ist jedem generatorseitigen Transformator 6 und dem jeweils zugehörigen Generator 5 innerhalb der Generatorzuleitung 4 jeweils ein Umrichter 70 zwischengeschaltet, der die Frequenz der von dem Generator 5 erzeugten Wechselspannung, beispielsweise auf eine feste Mittelfrequenz zwischen 150 und 250 Hz, hochsetzt. Die Generatorzuleitung ist hierdurch in eine den Generator 5 mit dem Umrichter 70 verbindende Teilleitung 71, eine den Umrichter 70 mit dem Transformator 6 verbindende Teilleitung 72 und eine den Transformator 6 mit dem Gleichrichter 3 verbindende Teilleitung 73 gegliedert. Die Teilleitungen 72 und 73 sind hierbei lediglich einphasig ausgebildet.

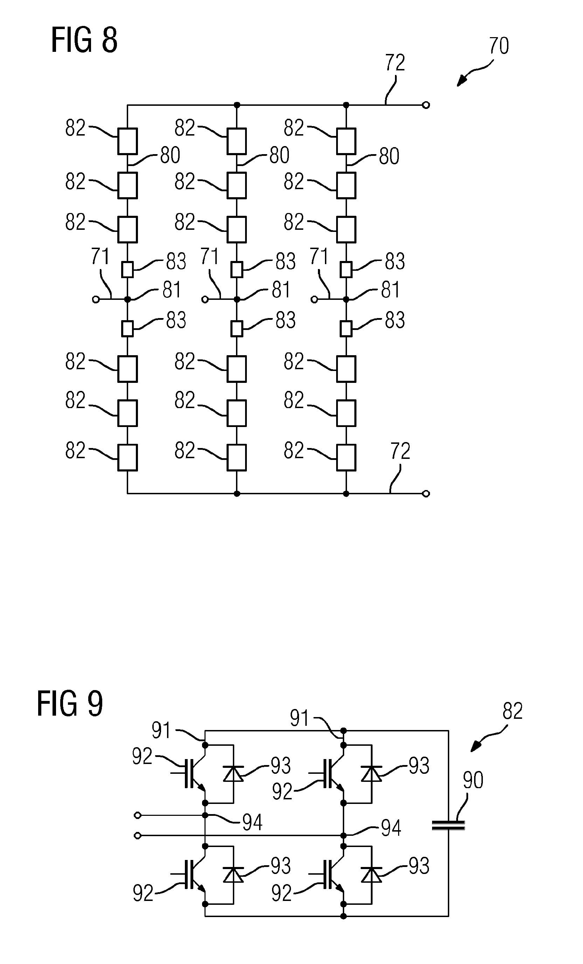

Gemäß FIG 8 ist der Umrichter 70 vorzugsweise als M2C-Stromrichter in der speziellen Bauform eines M2C-Direktumrichters ausgebildet. Hinsichtlich der prinzipiellen Struktur entspricht der Umrichter 70 dem in FIG 4 dargestellten Wechselrichter 21. Ebenso wie letzterer umfasst auch der Umrichter 70 drei Phasenstränge 80, die zwischen den Anschlüssen der Teilleitung 72 parallelgeschaltet sind. Innerhalb eines jeden der Phasenstränge 80 umfasst der Umrichter 70 beidseitig (also sowohl hochpotentialseitig als auch niederpotentialseitig) eines jeweiligen Mittelabgriffs 81 jeweils eine Reihenschaltung von Submodulen 82. In der beispielhaften Ausführung gemäß FIG 8 sind dabei in jedem Phasenstrang 80 sowohl hochpotentialseitig als auch niederpotentialseitig des jeweiligen Mittelabgriffs 81 jeweils drei Submodule 82 in Reihe geschaltet. Dem jeweiligen Mittelabgriff 81 und den Submodulen 82 des jeweiligen Phasenstrangs 80 ist hierbei - wiederum sowohl hochpotentialseitig als auch niederpotentialseitig - jeweils eine Drossel 83 zwischengeschaltet. Die Mittelabgriffe 81 sind mit den drei Phasen der Teilleitung 71 verschaltet.

Eines der identischen Submodule 82 ist in FIG 9 näher dargestellt. Wie dieser Darstellung zu entnehmen ist, umfasst jedes der Submodule 82 eine - durch einen oder mehrere Kondensatoren gebildete - Kapazität 90. Anders als bei dem gewöhnlichen M2C-Stromrichter gemäß FIG 4 und 5 sind bei den Submodulen 82 des Umrichters 70 der Kapazität 90 zwei parallele Halbbrücken 91 parallelgeschaltet, wobei jede dieser Halbbrücken 91 zwei in Reihe geschaltete Halbleiterschalter 92 (beispielsweise in Form von MOS-FET) sowie zwei - den Halbleiterschaltern 92 jeweils parallelgeschaltete Freilaufdioden 93 umfasst. Über Mittelabgriffe 94 zwischen den Halbleiterschaltern 92 der beiden Halbbrücken 91 sind die Submodule 82 jeweils in den zugehörigen Phasenstrang 80 geschaltet. In Hinblick auf die an sich bekannte Topologie und Funktionsweise des M2C-Direktumrichters wird auf M. Glinka, R. Marquardt: "A new AC/AC-Multilevel Converter Family Applied to a Single Phase Converter", IEEE-PEDS 2003, Singapur Bezug genommen

Die Einrichtung 1 wird beispielsweise bei einer einzeln betriebenen Windenergieanlage eingesetzt, die zwei oder mehr Generatoren 5 umfasst, wobei diese Generatoren 5 über eine gemeinsame Rotorwelle mit einem windgetriebenen Rotor starr gekoppelt sind. Alternativ hierzu können die Generatoren 5 allerdings auch mittelbar über ein Getriebe mit dem Rotor gekoppelt sein.

In einem alternativen Anwendungsfall wird die Einrichtung 1 bei einem Windpark eingesetzt, der eine Vielzahl von einzelnen Windenergieanlagen umfasst, wobei jeder Windenergieanlage mindestens ein Generator zugeordnet ist, der - wiederum unmittelbar oder mittelbar über ein Getriebe - mit einem windgetriebenen Rotor der Windenergieanlage gekoppelt ist.

Die Erfindung wird anhand der vorstehend beschriebenen Ausführungsbeispiele besonders deutlich, ist gleichwohl auf diese Ausführungsbeispiele aber nicht beschränkt. Vielmehr können weitere Ausführungsformen der Erfindung aus den Ansprüchen und der vorstehenden Beschreibung abgeleitet werden. Insbesondere können die anhand der Ausführungsbeispiele beschriebenen Einzelmerkmale der Erfindung im Rahmen der Ansprüche auch in abgewandelter Zusammenstellung eingesetzt werden, ohne den Rahmen der Erfindung zu verlassen.

## Patentansprüche

1. Einrichtung (1) zur Einspeisung windkrafterzeugter elektrischer Energie in ein elektrisches Netz (2,20), mit mehreren generatorseitigen Gleichrichtern (3), die ausgangsseitig in einem Gleichstromkreis (7) angeordnet sind, wobei jeder der generatorseitigen Gleichrichter (3) eingangsseitig mit einem Generator (5) einer Windenergieanlage verschaltet ist, wobei jeder der generatorseitigen Gleichrichter (3) über einen zwischengeschalteten generatorseitigen Transformator (6) mit dem zugehörigen Generator (5) verschaltet ist.

2. Einrichtung (1) nach Anspruch 1, wobei das Netz (2) als Hochspannungs-Gleichstrom-Netz ausgebildet ist, und wobei der Gleichstromkreis (7) unmittelbar an das Netz (2) angeschlossen ist.

3. Einrichtung (1) nach Anspruch 1, mit einem Wechselrichter (21), der in Reihe zu dem oder jeden generatorseitigen Gleichrichter (3) in den Gleichstromkreis (7) geschaltet ist.

4. Einrichtung (1) nach Anspruch 3, wobei das Netz (20) ein Mittelspannungs-Wechselstrom-Netz ist, und wobei der Wechselrichter (21) ausgangsseitig über eine Netzdrossel (23) ohne zwischengeschalteten Transformator mit dem Netz (20) verschaltet ist.

5. Einrichtung (1) nach Anspruch 3, wobei das Netz (2) ein Hochspannungs-Gleichstrom-Netz ist, und wobei der Wechselrichter (21) ausgangsseitig über eine Mittelfrequenz-Transformatoreinheit (30) und einen netzseitigen Gleichrichter (31) mit den Netz (2) verbunden ist.

6. Einrichtung (1) nach einem der Ansprüche 3 bis 5, wobei der Wechselrichter (21) als Modularer Mehrpunkt-Stromrichter ausgebildet ist.

7. Einrichtung (1) nach einem der Ansprüche 1 bis 6, wobei mindestens einer der generatorseitigen Gleichrichter (3) als Vierquadrantensteller ausgebildet ist.

8. Einrichtung (1) nach einem der Ansprüche 1 bis 7, wobei mindestens einer der generatorseitigen Gleichrichter (3) als Modularer Mehrpunkt-Stromrichter ausgebildet ist.

9. Einrichtung (1) nach einem der Ansprüche 1 bis 8, wobei mindestens einem der generatorseitigen Transformatoren (6) ein Umrichter (70) vorgeschaltet ist.

10. Einrichtung (1) nach Anspruch 9, wobei der Umrichter (70) als Modularer Mehrpunkt-Direktumrichter ausgebildet ist.

11. Einrichtung (1) nach einem der Ansprüche 1 bis 10, wobei alle generatorseitigen Gleichrichter (3) oder jeweils mehrere der generatorseitigen Gleichrichter (3) innerhalb des Gleichstromkreises (7) in einer Reihenschaltung verschaltet sind.

12. Windenergieanlage mit einem Rotor, mit mehreren damit gekoppelten Generatoren (5) sowie mit einer Einrichtung (1) nach einem der Ansprüche 1 bis 11.

13. Windpark mit mehreren Windenergieanlagen, von denen jede jeweils einen Rotor sowie mindestens einen damit gekoppelten Generator umfasst, sowie mit einer Einrichtung (1) nach einem der Ansprüche 1 bis 11.
